(19) Europäisches Patentamt
European Patent Office
Office européen des brevets

(11) Veröffentlichungsnummer: **0 346 726 A2**

(12) **EUROPÄISCHE PATENTANMELDUNG**

(21) Anmeldenummer: **89110188.3**

(51) Int. Cl.4: **G11B 7/24**

(22) Anmeldetag: **06.06.89**

(30) Priorität: **11.06.88 DE 3820001**

(43) Veröffentlichungstag der Anmeldung: **20.12.89 Patentblatt 89/51**

(84) Benannte Vertragsstaaten: **AT BE CH DE FR GB IT LI NL SE**

(71) Anmelder: **BASF Aktiengesellschaft**
**Carl-Bosch-Strasse 38**
**D-6700 Ludwigshafen(DE)**

(72) Erfinder: **Brosius, Sibylle, Dr.**
**L 9,3**
**D-6800 Mannheim 1(DE)**
Erfinder: **Barzynski, Helmut, Dr.**
**An der Ameisenhalde 49**
**D-6702 Bad Duerkheim(DE)**
Erfinder: **Feuerherd, Karl-Heinz, Dr.**
**Kesselgraben 16**
**D-6719 Hettenleidelheim(DE)**
Erfinder: **Schrott, Wolfgang, Dr.**
**Bruesseler Ring 45**
**D-6700 Ludwigshafen(DE)**
Erfinder: **Albert, Bernhard, Dr.**
**Rietburgstrasse 13**
**D-6701 Maxdorf(DE)**
Erfinder: **Acker, Michael, Dr.**
**Glockenzehnten 45**
**D-6900 Heidelberg(DE)**
Erfinder: **Schomann, Klaus Dieter, Dr.**
**Kopernikusstrasse 47**
**D-6700 Ludwigshafen(DE)**
Erfinder: **Kuppelmaier, Harald, Dr.**
**Kuehler Grund 30 a**
**D-6900 Heidelberg(DE)**
Erfinder: **Schmitt, Michael, Dr.**
**Sternstrasse 217**
**D-6700 Ludwigshafen(DE)**

(54) **Optisches Aufzeichnungsmedium.**

(57) Die Erfindung betrifft ein optisches Aufzeichnungsmedium aus einem Trägermaterial und einer lichtabsorbierenden Schicht, im wesentlichen bestehend aus einer löslichen Mischung eines thermoplastischen Bindemittels und mindestens eines Farbstoffs, wobei das thermoplastische Bindemittel ein in Alkoholen mit einem Siedepunkt von kleiner 200 °C lösliches Phenol-Aldehyd-Harz mit einem mittleren Molgewicht von größer 300 ist.

EP 0 346 726 A2

Xerox Copy Centre

# Optisches Aufzeichnungsmedium

Die Erfindung betrifft ein optisches Aufzeichnungsmedium aus einem Trägermaterial und einer lichtabsorbierenden Schicht, im wesentlichen bestehend aus einer löslichen Mischung eines thermoplastischen Bindemittels und mindestens eines Farbstoffs.

Aufzeichnungsmedien bei denen die Speicherung von Informationen durch lokal begrenzte Veränderungen der optischen Eigenschaften des Mediums erfolgt, sind bekannt. Hierbei wird mit Strahlung hoher Energiedichte, z.B. Laserlicht, eine thermisch ausgelöste Zustandsänderung der für die Aufzeichnung vorgesehenen Teile des Aufzeichnungsmaterials erreicht. Diese Veränderungen können ein begrenztes Verdampfen von Material, eine durch Erweichen entstandene Form- oder Oberflächenänderung der für die Aufzeichnung vorgesehenen Schicht, ein Verfärben oder Ausbleichen eines Farbstoffs oder auch ein Wechsel in der physikalischen Struktur des Materials sein, welche eine Änderung der optischen Eigenschaften, z.B. der Absorption oder Extinktion, des für die Aufzeichnung einsetzbaren Materials bewirken und mit geeigneten Vorrichtungen anschließend wieder detektierbar und als gespeicherte Information verarbeitet werden können.

Die bekannten optischen Aufzeichnungsmedien bestehen aus einem Trägermaterial aus Glas oder einem geeigneten Kunststoff, z.B. Polycarbonat, auf das dünne Schichten aus anorganischem Material, z.B. Metalle, Halbmetalle oder Legierungen, oder organische Verbindungen, z.B. Farbstoffe, aufgebracht sind. Diese dünnen Schichten werden vorwiegend durch Aufdampfen im Vakuum oder durch Sputtern erzeugt. Dabei muß jedoch die Dicke der Schicht so gewählt werden, daß die Reflexion maximal wird.

Für den Betrieb mit den vorwiegend eingesetzten im nahen Infrarot emittierenden Festkörperinjektionslasern werden als organische Farbstoffe insbesondere Phthalocyaninverbindungen, Methin-Farbstoffe und Quadratsäure-Derivate beschrieben. Azofarbstoff-Komplexe, Anthrachinon-und Triphenylmethanfarbstoffe sowie Pyrylium- und Thiopyryliumsalze sind ebenfalls beschrieben, aber nur eingeschränkt verwendbar, da ihr Absorptionsmaxiumum in den meisten Fällen für die bekannten Halbleiterlaser zu kurzwellig liegt. Dieses Problem entfällt bei den Dithiolen-Komplexen, die in großer Anzahl bekannt sind (z.B. J.A. McCleverty, Progr. Inorg. Chem. 10, S. 49-221 (1968); G.N. Schrauzer, Acc. Chem. Res. 2, S. 72-80 (1969)) und deren Anwendung in optischen Aufzeichnungsmedien beschrieben ist.

In der US-PS 4 097 895 wird ein Aufzeichnungsträger beschrieben, der eine Schicht aus einem lichtreflektierenden Material, z.B. Aluminium oder Gold, und eine lichtabsorbierende Schicht, z.B. Fluoreszein, aufweist. Dieser Aufzeichnungsträger kann mit der Strahlung eines Argonlasers betrieben werden. Die Dicke der lichtabsorbierenden Schicht wird so gewählt, daß die Struktur ein minimales Reflexionsvermögen besitzt. Ein auffallender Lichtstrahl löst die absorbierende Schicht ab, verdampft oder schmilzt sie, so daß ein Loch entsteht, wodurch die lichtreflektierende Schicht freigelegt wird. Nach der Aufnahme ergibt sich für die Wellenlänge des zur Aufnahme benutzten Lichts ein Unterschied zwischen dem minimalen Reflexionsvermögen der lichtabsorbierenden Schicht und dem höheren Reflexionsvermögen der lichtreflektierenden Schicht. Wenn das lichtreflektierende Material als dünne Schicht auf einem nur wenig wärmeleitenden Substrat vorgesehen ist, ist der Energieverlust sowohl durch Reflexion an der dünnen absorbierenden Schicht als auch wegen der geringen Wärmeleitung in der reflektierenden Schicht sehr klein. Die aus dem Lichtstrahl absorbierte Energie wird also auf dem sehr dünnen Film konzentriert.

Generell gilt jedoch, daß das Aufbringen der lichtabsorbierenden Farbstoffschichten durch Verdampfen im Vakuum oder durch Sputtern nicht nur aufwendig, sondern auch schwierig zu reproduzieren ist, da der Farbstoff in einer glatten Schicht mit hoher optischer Qualität in einer für die Empfindlichkeit des Aufzeichnungsmediums ausreichenden Dicke vorliegen muß und solche Farbstoffschichten außerdem mechanisch zu weich sind und auch zu leicht kristallisieren.

Um die Schichtqualität zu verbessern und die Empfindlichkeit zu erhöhen bzw. das Rauschen zu vermindern, wurde auch schon vorgeschlagen, den lichtabsorbierenden Farbstoff enthalten in einem schichtbildenden polymeren Bindemittel aufzubringen. Aus der US-A 4 380 769 sind mit einem Argonlaser beschreibbare Aufzeichnungsträger bekannt, welche als lichtabsorbierende Schicht Azofarbstoffe und/oder Cumarinverbindungen in einem polymeren Bindemittel enthalten. Die Verwendung von Farbstoffen in Verbindung mit Styrololigomeren wird von Kuroiwa in Jap. J. Appl. Phys., Vol. 22, No. 2, 1983, Seiten 340-43 beschrieben. Dort wird auch auf die Schwierigkeiten einer solchen Stoffkombination bei lichtabsorbierenden Schichten bedingt durch eine Phasentrennung und die Inkompatibilität zwischen Farbstoff und Oligomeren hingewiesen. Daneben wird u.a. sowohl in der US-A 3 637 581 als auch in der EP-A 200 833 die Möglichkeit aufgezeigt, durch eine chemische Bindung zwischen dem Chromophor und dem Polymeren die vorgenannten Nachteile zu beheben. Für viele Anwendungsgebiete ist eine solche Maßnahme jedoch ungeeignet, da nur eine geringe Auswahl an Farbstoffen hierfür in Frage kommen, die zudem keine

optimalen lichtabsorbierenden Schichten ergeben.

Zusammenfassend ergibt sich, daß der Einsatz spezieller, wegen ihrer ausgezeichneten Absorptionseigenschaften besonders geeigneter Farbstoffe für die Speicherschichten optischer Aufzeichnungsmedien vor allem Probleme bezüglich des Aufbringens optisch einheitlicher und stabiler Schichten aufwirft. Dabei ist insbesondere die Kristallisation in reinen Farbstoffschichten sowie in schlecht verträglichen Farbstoff/Bindemittel-Schichten zu erwähnen. Auch der Zusatz dieser Farbstoffe zu schichtbildenden Polymeren zeigt durch die nur beschränkte Löslichkeit der Komponenten bzw. durch eine zeitlich bedingte Phasentrennung Schwierigkeiten. Auch ist es üblich die lichtabsorbierende Schicht auf den meist aus Polycarbonat bestehenden Träger aufzuschleudern, so daß sich Alkohole als Lösungsmittel anbieten. Die meisten der hierfür verwendeten gängigen Filmbildner sind jedoch in Alkoholen unlöslich. Insbesondere die für das optische Aufzeichnungsverfahren bevorzugten IR-Farbstoffe sind in den üblicherweise verwendeten Filmbildnern nicht ausreichend verträglich.

Es bestand daher die Aufgabe, optische Aufzeichnungsmedien bereitzustellen, deren lichtabsorbierende Schicht aus einer löslichen Mischung eines Farbstoffs und eines Polymeren besteht, wobei das Polymere eine verbesserte Löslichkeit der Farbstoffe und die Ausbildung dickerer Schichten erlaubt sowie eine Unterdrückung der Kristallisation bewirkt.

Es wurde nun gefunden, daß optische Aufzeichnungsmedien aus einem Trägermaterial und einer lichtabsorbierenden Schicht, die im wesentlichen aus einer löslichen Mischung eines thermoplastischen Bindemittels und mindestens einem Farbstoff besteht, die Aufgabe löst, wenn das thermoplastische Bindemittel ein in Alkoholen mit einem Siedepunkt von kleiner 200 °C lösliches Phenol-Aldehyd-Harz mit einem Molgewicht von größer 300 ist.

Diese auch als Novolake bezeichneten Harze ergeben besonders vorteilhafte optische Aufzeichnungsmedien, da sie sich durch eine besonders gute Verträglichkeit für die Farbstoffe auszeichnen. Diese lichtabsorbierenden Schichten lassen sich mit dem technisch leicht handhabbaren spin-coating Prozeß hinreichend dick auftragen, so daß ein gutes Signal-Rausch-Verhältnis erreichbar wird. Die angestrebten Schichtdicken im Bereich von 50 bis 200 nm, vorzugsweise 80 bis 120 nm, lassen sich durch die Verwendung des speziellen Phenol-Aldehyd-Harzes für die erfindungsgemäßen optischen Aufzeichnungsmedien überraschend gut einstellen. Die Kristallisation läßt sich mit Bindemitteln unterdrücken.

Die in Alkoholen mit einem Siedepunkt von kleiner 200 °C löslichen Phenol-Aldehyd-Harze, welche für die erfindungsgemäßen optischen Aufzeichnungsträger geeignet sind, werden durch die Umsetzung polyfunktioneller Phenole mit einem Aldehyd erhalten. Die Herstellung erfolgt durch Erhitzen des polyfunktionellen Phenols zusammen mit dem Aldehyd in einem Lösungsmittel in Gegenwart eines Katalysators vorzugsweise unter Inertgas. Durch einen Unterschuß des Aldehyds gegenüber dem polyfunktionellen Phenol in Gegenwart eines sauren Katalysators wird ein mittleres Molgewicht von größer 300, vorzugsweise zwischen 600 und 2000, eingestellt. Andererseits kann durch einen geringen Überschuß des Aldehyds gegenüber dem polyfunktionellen Phenol unter definiert sauren Bedingungen ebenfalls ein mittleres Molgewicht von größer 300, vorzugsweise zwischen 2000 und 10000, eingestellt werden.

Als polyfunktionelle Phenole lassen sich Phenol selbst sowie Verbindungen der Formel

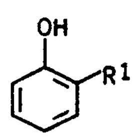
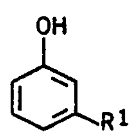
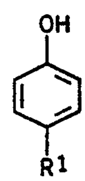
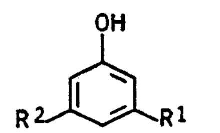

und

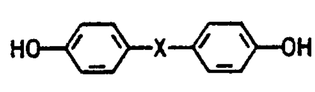

allein oder Gemische daraus einsetzen, wobei $R^1$ und $R^2$ unabhängig voneinander eine Alkylgruppe mit 1 bis 10 Kohlenstoffatomen, eine Phenylgruppe, ein Halogenatom oder eine Hydroxylgruppe bedeuten und X für $-CH_2-$, $-C(CH_3)_2-$ oder -O- steht.

Als Aldehyde können vorzugsweise Formaldehyd oder Formaldehyd abspaltende Verbindungen, aber auch Acetaldehyd, chlorierte Acetaldehyde sowie Acetale und Halbacetale eingesetzt werden.

Das molare Verhältnis der Komponenten beträgt im allgemeinen 0,80 bis 1,2 Aldehyd, bezogen auf polyfunktionelles Phenol in Gegenwart eines sauren Katalysators.

Die Reaktion wird üblicherweise in Gegenwart von Lösungsmitteln, wie Ethern, Alkoholen und Estern durchgeführt, die so ausgewählt werden, daß eine Reaktionstemperatur von 60 bis 120 °C angestrebt

werden kann.

Dieses, das erfindungsgemäße optische Aufzeichnungsmedium kennzeichnende Phenol-Aldehyd-Harz ermöglicht die Herstellung einer löslichen Mischung mit einem Farbstoff zur Ausbildung der lichtabsorbierenden Schicht.

Als Farbstoffe für die lichtabsorbierende Schicht kommen die an sich bekannten IR-Farbstoffe in Frage. Es sind vorwiegend die Klassen der Azulenquadratsäurefarbstoffe, wie sie in der DE-A 37 33 173 beschrieben sind, der Cyaninfarbstoffe gemäß den DE-A 35 33 772, 36 08 214, 37 38 911 und 38 10 642, der Phthalocyanin- und Naphthalocyaninfarbstoffe, wie z.B. gemäß den DE-A 34 46 418, 35 20 109, den EP-A 155 780, 186 404, 191 215, 204 876, 213 923, der Dithiolenfarbstoffe gemäß DE-A 35 05 751, der Naphthochinon- und Anthrachinonfarbstoffe, der Chinonfarbstoffe gemäß DE-A 35 07 379, der Azofarbstoffe gemäß US-A 4 702 945, der N,N,N′,N′-Tetratris(p-dialkylaminophenyl)p-phenylendiamine, der Porphyrine und der Azokomplexfarbstoffe.

Im Zusammenhang mit dem erfindungsgemäßen optischen Aufzeichnungsmedium besonders bevorzugte Farbstoffe sind die Azulenquadratsäurefarbstoffe, wie sie u.a. in den DE-A 36 31 843, 37 33 173 und 38 10 642 genannt sind, und die Si-Naphthalocyanine.

Zur Herstellung des erfindungsgemäßen optischen Aufzeichnungsmediums wird eine Farbstofflösung angesetzt, die einen Gehalt von Feststoff zu Lösungsmittel zwischen 0,50 zu 99,5 und 6 zu 94 Teilen, vorzugsweise zwischen 2 zu 98 und 4 zu 96 Teilen aufweist. Nach erfolgtem Auflösen werden Staub und andere nicht gelöste Bestandteile durch übliche Verfahren, z.B. Zentrifugation oder Filtration, abgetrennt. Die Lösung wird mit einer handelsüblichen Laborbelackungsanlage (z.B. der Firma Convac) auf eine Scheibe aufgetragen, wobei sich die Schichtdicke durch die Zusammensetzung der Lösung und die Rotationsgeschwindigkeit der Scheibe einstellen läßt. Die Schichtdicke läßt sich mit einem α-Step-Gerät (z.B. α-Step-Gerät 200 der Firma Tencor) bestimmen, indem in der Schicht auf einem harten Substrat, vorzugsweise Glas, die Höhe eines Kratzers mit einer feinen Nadel abgetastet wird. Die Homogenität wird unter einem Lichtmikroskop (z.B. bei 500-facher oder 1000-facher Vergrößerung) kontrolliert. Die optischen Eigenschaften der Schicht werden mit einem UV-VIS-Spektrometer (z.B. Lambda 5 der Firma Perkin Elmer) gemessen.

Ein weiterer Vorteil bei der Ausbildung der lichtabsorbierenden Schicht mit dem speziellen Phenol-Aldehyd-Harz ergibt sich aus der Möglichkeit die ansonsten getrennt zuzusetzenden Antioxidantien und UV-Stabilisatoren direkt in das Bindemittel einzukondensieren. Beispielhaft seien hier p-tert-Butylphenol und 2,4-Dihydroxybenzophenon genannt.

Die auf diese Weise hergestellten erfindungsgemäßen optischen Aufzeichnungsmedien zeichnen sich durch eine hohe Stabilität der lichtabsorbierenden Schicht, eine geringe Empfindlichkeit gegenüber Sauerstoff, eine hohe Reflektivität sowie ein geringes Grundrauschen aus.

Die Erfindung sei anhand der folgenden Beispiele im Vergleich zu Versuchen nach dem Stand der Technik näher erläutert (Mengenangaben in Teilen geben Gewichtsteile an).

Vergleichsbeispiel 1

Es wird eine Farbstofflösung aus 4 Teilen Farbstoff gemäß Beispiel 6 der DE-A 37 33 173 und 96 Teilen n-Propanol angesetzt. Die staubfrei filtrierte Lösung wird mit einer handelsüblichen Laborbelackungsanlage aufgeschleudert. Bei Umdrehungsgeschwindigkeiten zwischen 700 und 4000 Upm werden Schichten erhalten, die sich bei Messung mit einem α-Step-Gerät dünner als 100 nm erweisen.

Beispiel 1

Es wird eine Farbstofflösung aus 3,4 Teilen Farbstoff gemäß Beispiel 6 der DE-A 37 33 173, 0,6 Teilen Novolak und 96 Teilen n-Propanol angesetzt, wobei der Novolak hergestellt wurde durch Umsetzung von Formaldehyd und einer Phenolkomponente, die aus 30 Teilen Phenol und 70 Teilen einer Mischung aus meta- und para-Kresol besteht. Dieser Novolak besitzt ein mittleres Molekulargewicht von 6300 (ermittelt durch GPC in THF mit Polystyrol als Standard) und zeigt eine Erweichungstemperatur von 117,8 °C (nach DIN 52011). Die staubfrei filtrierte Lösung wird analog Vergleichsbeispiel 1 aufgeschleudert. Es werden Schichtdicken von 100 nm erhalten.

Vergleichsbeispiel 2

Es wird eine Farbstofflösung aus 1,17 Teilen Farbstoff gemäß Beispiel 7 der DE-A 36 31 843, 0,13 Teilen Polystyrol KR 2602 und 98,7 Teilen Toluol hergestellt. Die staubfrei filtrierte Lösung wird analog Vergleichsbeispiel 1 aufgeschleudert. Im Mikroskop sind Kristallite und eine Untergrundstruktur zu erkennen, wobei letztere auf eine Entmischung hinweist.

Beispiel 2

Es wird eine Farbstofflösung aus 0,80 Teilen Farbstoff gemäß Beispiel 7 der DE-A 36 31 843, 1,2 Teilen Novolak und 98 Teilen Diacetonalkohol an gesetzt, wobei der Novolak hergestellt wurde durch Umsetzung von Formaldehyd mit Phenol. Dieser Novolak besitzt ein mittleres Molekulargewicht von 10000 (ermittelt durch GPC in THF mit Polystyrol als Standard) und zeigt eine Erweichungstemperatur von 133,4° C (nach DIN 52 011). Die staubfrei filtrierte Lösung wird analog Vergleichsbeispiel 1 aufgeschleudert. Im Mikroskop sind keinerlei Kristallite oder Untergrundstrukturen zu erkennen.

Vergleichsbeispiel 3

Es wird eine Farbstofflösung aus 3 Teilen Farbstoff gemäß Beispiel 8 der DE-A 38 10 642 und 97 Teilen n-Propanol angesetzt. Die staubfrei filtrierte Lösung wird analog Vergleichsbeispiel 1 aufgeschleudert. Schon nach 2 Stunden läßt sich im Mikroskop eine deutliche Kristallisation in der Schicht erkennen.

Beispiel 3

Es wird eine Farbstofflösung aus 1,5 Teilen Farbstoff gemäß Beispiel 8 der DE-A 38 10 642 und 1,5 Teilen Novolak analog Vergleichsbeispiel 2 und 97 Teilen n-Propanol angesetzt. Die staubfrei filtrierte Lösung wird analog Vergleichsbeispiel 1 aufgetragen. In der Schicht ist auch nach Tagen noch keine Kristallisation erkennbar.

## Ansprüche

1. Optisches Aufzeichnungsmedium aus einem Trägermaterial und einer lichtabsorbierenden Schicht, im wesentlichen bestehend aus einer löslichen Mischung eines thermoplastischen Bindemittels und mindestens eines Farbstoffs, dadurch gekennzeichnet, daß das thermoplastische Bindemittel ein in Alkoholen mit einem Siedepunkt von kleiner 200° C lösliches Phenol-Aldehyd-Harz mit einem mittleren Molgewicht von größer 300 ist.

2. Optisches Aufzeichnungsmedium gemäß Anspruch 1, dadurch gekennzeichnet, daß das thermoplastische Bindemittel aufgebaut ist aus einem Phenol oder polyfunktionellen Verbindungen der Formel

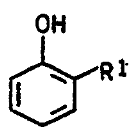
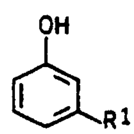
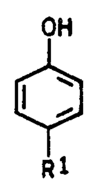
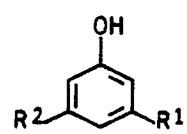

und

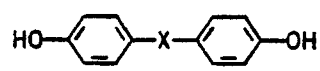

allein oder Gemischen daraus, wobei $R^1$ und $R^2$ unabhängig voneinander eine Alkylgruppe, ein Halogenatom oder eine Hydroxylgruppe bedeuten und X für $-CH_2-$, $-C(CH_3)_2-$ oder -O- steht, und Aldehyden aus der Gruppe von Formaldehyd, Formaldehyd abspaltende Verbindungen, Acetaldehyd, chlorierte Acetaldehyde sowie Acetale und Halbacetale, und dieses thermoplastische Bindemittel ein mittleres Molgewicht von 600 bis 10 000 aufweist.